# EUROPÄISCHE PATENTSCHRIFT

(11) **EP 2 274 158 B1**
(45) Veröffentlichungstag und Bekanntmachung des Hinweises auf die Patenterteilung: **05.09.2012**
(21) Anmeldenummer: 09737936.6
(22) Anmeldetag: 13.03.2009
(51) Int. Cl.: B29D 99/00, B29C 70/44, B29L 31/30

(54) **Verfahren und Umformvorrichtung zur Herstellung eines Faserverbundbauteils für die Luft- und Raumfahrt**
Method and shaping device for producing a composite fibre component for air and space travel
Procédé et dispositif de déformation pour la fabrication d'une pièce composite à fibres pour l'aéronautique et l'aérospatiale

(30) Priorität: 30.04.2008 DE 102008001498; 30.04.2008 US 125988 P
(43) Veröffentlichungstag der Anmeldung: 19.01.2011
(73) Patentinhaber: Airbus Operations GmbH, 21129 Hamburg (DE)
(72) Erfinder: SANDER, Peter, 28215 Bremen (DE); LENGSFELD, Hauke, 21717 Helmste (DE); MARQUARDT, Hans, 21717 Fredenbeck (DE)
(74) Vertreter: Isarpatent
(86) Internationale Anmeldenummer: PCT/EP2009/052980
(87) Internationale Veröffentlichungsnummer: WO 2009/132892

(56) Entgegenhaltungen:
- EP-A- 1 134 070
- EP-A- 1 537 982
- US-A- 5 190 773
- US-A1- 2007 175 171

## Beschreibung

Die vorliegende Erfindung bezieht sich auf ein Verfahren zur Herstellung eines Faserverbundbauteils für die Luft- und Raumfahrt und auf eine Umformvorrichtung zur Herstellung eines solchen Faserverbundbauteils mittels eines solchen Verfahrens.

Obwohl auf beliebige Faserverbundbauteile anwendbar, werden die vorliegende Erfindung sowie die ihr zugrunde liegende Problematik nachfolgend mit Bezug auf flächige, stringerversteifte Kohlefaserkunststoff (CFK)-Bauteile, beispielsweise Hautschalen eines Flugszeugs, näher erläutert.

Es ist allgemein bekannt, CFK-Hautschalen mit CFK-Stringern zu versteifen, um den hohen Belastungen im Flugzeugbereich bei möglichst geringem zusätzlichem Gewicht standzuhalten. Dabei kommen unterschiedliche Arten von Stringern zur Anwendung, zum Beispiel T- und Ω-Stringer.

Der Querschnitt von T-Stringern setzt sich aus der Basis und dem Steg zusammen. Die Basis bildet die Verbindungsfläche zur Hautschale. Die Verwendung von T-Stringer versteiften Hautschalen ist im Flugzeugbau weit verbreitet.

Hautschalen mit Stringern werden zum Beispiel mittels eines Infusionsverfahrens mit Einbringen einer Matrix, beispielsweise eines Epoxidharzes, in Faserhalbzeuge hergestellt. Unter Faserhalbzeugen sind Gewebe, Gelege und Fasermatten zu verstehen. Diese werden mit der Matrix versehen und anschließend beispielsweise in einem Autoklav ausgehärtet. Infusionsverfahren können gegenüber anderen bekannten Verfahren zur Herstellung von Faserverbundbauteilen, wie beispielsweise dem Prepreg-Verfahren, kostengünstig sein, weil dies die Verwendung von kostengünstigeren Faserhalbzeugen erlaubt.

Bei der Neuentwicklung von Luft- und Raumfahrzeugteilen finden häufig mehrere Iterationsschritte statt, bis die optimale Bauteilgeometrie gefunden ist. Dieses hat Auswirkungen auf die Geometrie von Fertigungsmitteln, so dass Anpassungen am fertigen Serienwerkzeug nicht zu vermeiden sind.

Nach derzeitigem Stand ist die Herstellung von Fertigungsmitteln und Werkzeugen für die Fertigung von CFK-Bauteilen häufig extrem zeitaufwändig und teuer aufgrund der verwendeten Materialien und Herstellungsprozesse. Dies sei an einem Beispiel verdeutlicht. Bei der Neuentwicklung und Herstellung von stringerversteiften Panels, wie z. B. Seitenleitwerksschalen, kommt es vor, dass aufgrund hoher Lasten die Laminatdicken der Basishaut oder der Stringer angepasst werden müssen. Sind im Stringer Rampungen vorgesehen, müssen diese aufgrund der geänderten Laminatdicken, z. B. in der Basishaut, ebenfalls angepasst werden. Somit ist auch eine Anpassung der zur Herstellung der Stringer verwendeten Werkzeuge erforderlich.

Bei der Herstellung von Stringern, zum Beispiel über einen so genannten HotForm-Prozess, und späteren Verarbeitung der Stringer in einem Setz- und Härteprozess auf einem Panel werden derzeit je Prozess eigene Werkzeuge eingesetzt, was einen entsprechend hohen Zeit-, Teile- und Kostenaufwand mit sich bringt.

Dokument EP 1 537 982 beschreibt ein Verfahren zur Herstellung eines versteiften Faserverbundbauteils für die Luft- und Raumfahrt, mit folgenden Verfahrensschritten:
- Bereitstellen eines Umformwerkzeugs;
- Ablegen eines Faserhalbzeugs;
- Umformen des abgelegten Faserhalbzeugs zum Bilden zumindest eines Versteifungsabschnitts;
- definiertes Positionieren des gebildeten Versteifungsabschnitts relativ zu einem zugeordneten Faserverbundbauteilabschnitt; und
- Aushärten des Versteifungsabschnitts zum Bilden des versteiften Faserverbundbauteils.

Dokument DE 600 09 259 T2 beschreibt ein Herstellungsverfahren für Verbundmaterialteile, bei dem mindestens eine ungehärtete Strebe mittels eines strukturellen Haftvermittlers in Anhaftung an einem gehärteten Basisteil gebracht wird. Diese Verbondung wird durch Formung und Druckaufbringung unter Ver-wendung speziell für diesen Zweck ausgebildeter Werkzeuge erzeugt, so dass die Möglichkeit besteht, das Harz und den während des Autoklavzyklus erzeugten Haftvermittlerfluss zu steuern und rückzuhalten.

Dokument DE 601 04 046 T2 beschreibt ein Verfahren zur Herstellung eines Zwischenproduktes aus einem faserverstärkten Verbundmaterial. Dieses Verfahren umfasst die Herstellung eines halbgehärteten Zwischenprodukts mit einem Härtungsgrad von 1 bis 50% aus einem faserverstärkten Verbundmaterial, das aus einer mit einem wärmehärtenden Harz imprägnierten Verstärkungsfaser zusammengesetzt ist.

Vor diesem Hintergrund liegt der vorliegenden Erfindung die Aufgabe zugrunde, ein kostengünstigeres Verfahren und eine kostengünstigere Umformvorrichtung zur Herstellung eines Faserverbundbauteils für die Luft- und Raumfahrt bereitzustellen.

Erfindungsgemäß wird diese Aufgabe durch ein Verfahren mit den Merkmalen des Patentanspruchs 1 und/oder durch eine Umformvorrichtung mit den Merkmalen des Patentanspruchs 11 gelöst.

Eine der vorliegenden Erfindung zugrunde liegenden Idee besteht darin, dass ein Umformwerkzeug mit einem Formabschnitt zum Formen eines Umform-/Stützelementes bereitgestellt wird, wobei das Umform-/Stützelement beim Bilden eines Versteifungsabschnitts bzw. Versteifungselementes verwendet wird und mit dem Versteifungsabschnitt beim Abnehmen vom Umformwerkzeug, Positionieren und Aushärten zusammenbleibt und ihn abstützt.

Demgemäß wird ein Verfahren zur Herstellung eines Faserverbundbauteils für die Luft- und Raumfahrt geschaffen, bei welchem zunächst ein Umformwerkzeug mit einem vorbestimmten Formabschnitt bereitgestellt wird. Mittels des Formabschnitts des Umformwerkzeugs wird ein Umform-/Stützelement geformt, auf welchem zumindest abschnittsweise ein Faserhalbzeug abgelegt wird. Das abgelegte Faserhalbzeug wird mittels des Umform-/Stützelementes zum Bilden zumindest eines Versteifungsabschnitts umgeformt, wonach das Umform-/Stützelement mitsamt darauf gebildeten Versteifungsabschnitt von dem Umformwerkzeug abgenommen wird. Dann wird der gebildete Versteifungsabschnitt relativ zu einem zugeordneten Faserverbundbauteilabschnitt definiert positioniert, wobei er durch das Umform-/Stützelement abgestützt ist. Zum Bilden des versteiften Faserverbundbauteils wird der Versteifungsabschnitt anschließend ausgehärtet.

Weiterhin wird eine Umformvorrichtung für ein solches Faserverbundbauteil für die Luft- und Raumfahrt mit einem Umformwerkzeug, welches einen vorbestimmten Formabschnitt aufweist, und einem Umform-/Stützelement, welches in dem Formabschnitt des Umformwerkzeugs lösbar aufgenommen ist, bereitgestellt.

Somit weist die vorliegende Erfindung gegenüber den eingangs genannten Ansätzen den Vorteil auf, dass das zur Bildung des Versteifungsabschnitts bzw. Stringers, z. B. in dem HotForm-Prozess, eingesetzte Werkzeug, nämlich das Umform-/Stützelement gleichzeitig auch im darauf folgenden Setz- und Härteprozess verwendet werden kann. Somit wird ein Zeit- und Kostenaufwand eingespart.

In den Unteransprüchen finden sich vorteilhafte Ausgestaltungen und Verbesserungen der vorliegenden Erfindung.

Das Umformwerkzeug wird aus den Geometriedaten eines Versteifungselementes bzw. -abschnitts, zum Beispiel eines Stringers, für ein Umform-/Stützelement, zum Beispiel ein Blech, erzeugt, das die Geometrie des späteren Bauteils (z. B. Stringer) abbildet. Dabei wird das Umformwerkzeug, das beispielsweise aus Holz besteht, zum Beispiel so gefräst, dass ein Formabschnitt zur Umformung des Umform-/Stützelementes entsteht. Das darauf geformte Blech weist dann ein Profil auf, welches zum Beispiel ein L- oder U-Profil sein kann. Das Blech kann beispielsweise aus Stahl oder Aluminium, aber auch aus einem Faserverbundwerkstoff oder einer Kombination aus den vorgenannten Materialien bestehen.

Das so geformte Umform-/Stützelement kann nun gleichzeitig als Umformfläche für den Versteifungsabschnitt im späteren HotForm-Prozess genutzt werden. Hierbei kann es auf dem Umformwerkzeug verbleiben. Dabei ist es auch möglich, dass hierzu nicht nur das Umform-/Stützelement sondern auch das Umformwerkzeug, zum Beispiel ein Teil seiner Oberfläche, zum Ablegen des Faserhalbzeugs benutzt wird.

Nach dem Warmumformen des Versteifungsabschnitts wird das Umform-/Stützelement mitsamt dem darauf befindlichen Versteifungsabschnitt von dem Umformwerkzeug abgenommen, wobei das Umform-/Stützelement als Stützelement für den Setzprozess des Versteifungsabschnitts auch für den später folgenden Härteprozess fungiert. Danach wird das Umform-/Stützelement von dem gehärteten Versteifungsabschnitt entfernt und wieder auf dem Formabschnitt des Umformwerkzeugs abgelegt, wodurch sich eine Wiederverwendung ergibt.

Während des Umformprozesses des abgelegten Faserhalbzeugs bietet sich ferner die Möglichkeit auch die für die spätere Härtung notwenige Vakuumfolie unter das abzulegende Faserhalbzeug auf das Umform-/Stützelement bzw. auch auf die dazu benutzte Oberfläche des Umformwerkzeugs aufzubringen, wodurch sich ein Trennelement ergibt, durch welches das Umform-/Stützelement bzw. auch das Umformwerkzeug vom Versteifungsabschnitt trennbar sind.

Damit ist es auch möglich, dass das Umform-/Stützelement au-βerhalb des Vakuumaufbaus bei dem Härteprozess belassen werden kann. Durch diese Verfahrensweise können hier kostengünstige Metallbleche (Stahl, Aluminium) verwendet werden. Die Wärmeausdehnung des Metallprofils in Längsrichtung hat in diesem Fall keinen negativen Einfluss auf die Geometrie des Versteifungsabschnitts bzw. Stringers, das sich das Umform-/Stützelement frei bewegen kann. Ein kostenaufwändiges Werkzeugmaterial, wie zum Beispiel Ni-36, ist dann in diesem Fall nicht erforderlich.

Ein zusätzliches Trennelement, zum Beispiel eine entsprechende Beschichtung, zur Bewirkung einer Trennung ist selbstverständlich auch möglich, wobei auch ein solches ohne Trennfolie zur Anwendung kommen kann.

Wird nun eine Anpassung des Faserhalbzeug- bzw. Laminataufbaus, z. B. aus statischen Gründen notwendig, ändert sich die geometrische Kontur des Versteifungselementes, das heißt des Umform-/Stützelementes. Damit muss sowohl die Geometrie des Profilbleches bzw. Umform-/Stützelementes als Umformungswerkzeug für das Faserhalbzeug als auch die Geometrie der Urform, nämlich des Umformwerkzeugs für die Umformung und Bildung des Umform-/Stützelementes jeweils neu angepasst, das heißt neu hergestellt, werden.

Das Umformwerkzeug kann aus einem kostengünstigen Werkstoff, wie z. B. Meranti-Holz, hergestellt werden, da es sich z. B. für das Profilblech um eine einfache Blechumformung handelt. Das gleiche Vorrichtungsmaterial kann auch eingesetzt werden, um ein Umform- und Härtewerkzeug, nämlich ein Umform-/Stützelement aus CFK aufzubauen. Derartige Werkzeuge aus CFK bieten aufgrund des gleichen thermischen Ausdehnungsverhaltens wie das zu härtende Material, hier der Stringer bzw. Versteifungsabschnitt, den Vorteil, dass sie auch bei schwierigen Geometrien (z. B. Rampen, Hinterschneidungen) einsetzbar sind. Wohingegen Metallblechprofile nur bei einfachen Geometrien (ohne oder nur mit kleinen Rampen) verwendbar sind.

Das mit dem Umformwerkzeug gebildete Umform-/Stützelement kann in einer Ausführung der Erfindung auch mit einem weiteren mit einem anderen Umformwerkzeug gebildeten Umform-/Stützelement zur Bildung eines zusammengesetzten Versteifungsabschnittsprofils zusammengefügt werden. Wenn zum Beispiel die einzeln gebildeten Umform-/Stützelemente ein L-Profil besitzen, können sie zu einem Stringer mit einem T-Profil zusammengefügt werden, wobei die Umformwerkzeuge ebenfalls als Träger und Druckwerkzeuge dienen können.

Ebenso ist dies bei U-Profilen der Fall, welche untereinander zusammengefügt werden können.

Es ist auch alternativ möglich, dass ein gebildetes U-Profil in seiner Länge auf dem Umformwerkzeug getrennt wird, um zwei L-Profile zu erzeugen.

Es ist weiterhin vorgesehen, dass das Abnehmen des Umform-/Stützelementes mitsamt darauf gebildetem Versteifungsabschnitt von dem Umformwerkzeug und das definierte Positionieren mittels einer Handhabungseinrichtung ausgeführt wird. Dazu kann das Umform-/Stützelement zur Zusammenwirkung mit der Handhabungseinrichtung vorgesehen sein, beispielsweise mit einer Eingriffseinrichtung. Die Handhabungseinrichtung kann alternativ zum Beispiel Sauggreifer aufweisen.

Die Erfindung wird im Folgenden anhand von Ausführungsbeispielen unter Bezugnahme auf die beiliegenden Figuren der Zeichnung näher erläutert.

Von den Figuren zeigen:
- Fig. 1a-1b: ein Ausführungsbeispiels eines Umformwerkzeugs mit einem Formabschnitt;
- Fig. 2a-2b: ein Ausführungsbeispiel einer Umformung eines Umform-/Stützelementes mit dem Umformwerkzeug nach Fig. 1b;
- Fig. 3: ein Ausführungsbeispiel einer Bildung eines aus zwei Versteifungsabschnitten mit L-Profil zusammengesetzten T-Profils;
- Fig. 4: ein weiteres Ausführungsbeispiel einer Bildung eines aus zwei Versteifungsabschnitten mit U-Profil zusammengesetzten Versteifungsabschnitts;
- Fig. 5: das Ausführungsbeispiel nach Fig. 3 mit einem Trennelement;
- Fig. 6: das Ausführungsbeispiel nach Fig. 4 mit einem Trennelement; und
- Fig. 7a-h: ein schematische Darstellung von Verfahrensschritten eines Ausführungsbeispiels eines erfindungsgemäßen Verfahrens und einer erfindungsgemäßen Umformvorrichtung zur Herstellung eines Faserverbundbauteils für die Luft- und Raumfahrt.

In allen Figuren der Zeichnung sind gleiche bzw. funktionsgleiche Elemente - sofern nichts anders angegeben ist - mit jeweils den gleichen Bezugszeichen versehen worden.

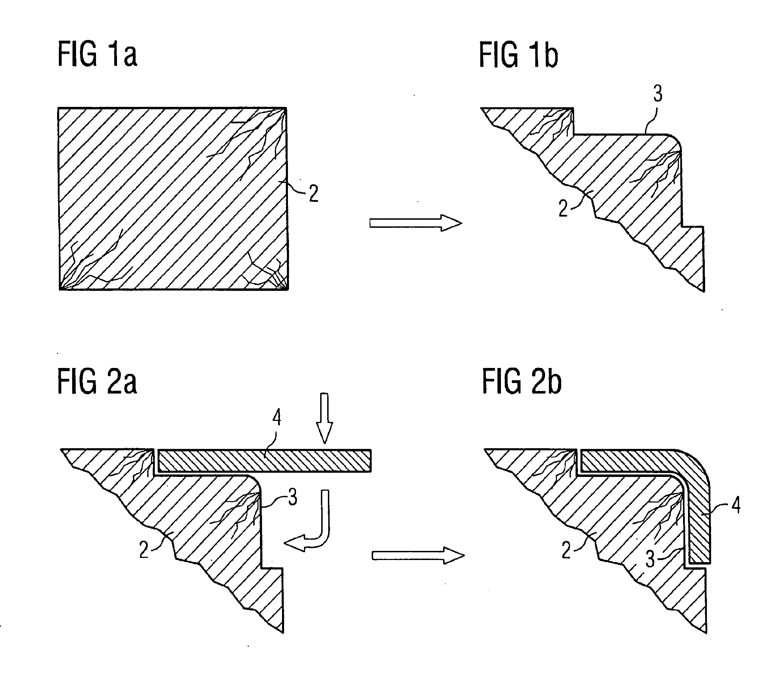

Fig. 1a und 1b zeigen ein Ausführungsbeispiel eines Umformwerkzeugs 2 mit einem Formabschnitt 3. Das Umformwerkzeug 2 ist in diesem Beispiel ein Abschnitt mit einer bestimmten Länge aus Holz mit einem rechteckigen Querschnitt (nur der Querschnitt ist dargestellt). Das Umformwerkzeug 2 kann auch aus einem anderen Werkstoff bestehen, zum Beispiel aus Stahl. Ein Rand (oder mehrere Ränder) des Umformwerkzeugs 2 wird (werden) mittels eines Bearbeitungsverfahrens, zum Beispiel Fräsen (auch andere Verfahren sind denkbar, ebenfalls Gussverfahren), mit Ausnehmungen versehen, die einen Formabschnitt 3 bilden, der sich teilweise oder über die gesamte Länge des Umformwerkzeugs 2 erstreckt.

Mit Hilfe des Formabschnitts 3 wird ein Umform-/Stützelement 4 in geeigneter Weise so umgeformt, wie durch Pfeile angedeutet dass es die Form des Formabschnitts 3 einnimmt. Dazu zeigt Fig. 2a das Umform-/Stützelement 4 in einer Ausgangsstellung und Fig. 2b in einer umgeformten Stellung. Das Umform-/Stützelement 4 ist in diesem Beispiel ein Metallblech, dessen Stärke der Ausnehmungstiefe des Formabschnitts 3 entspricht, so dass bei umgeformten Umform-/Stützelement 4 dessen Oberflächen im Wesentlichen mit den korrespondierenden Oberflächen des Umformwerkzeugs 2 plan verlaufen. Das umgeformte Umform-/Stützelement 4 weist in diesem Beispiel einen L-Profil-Querschnitt auf.

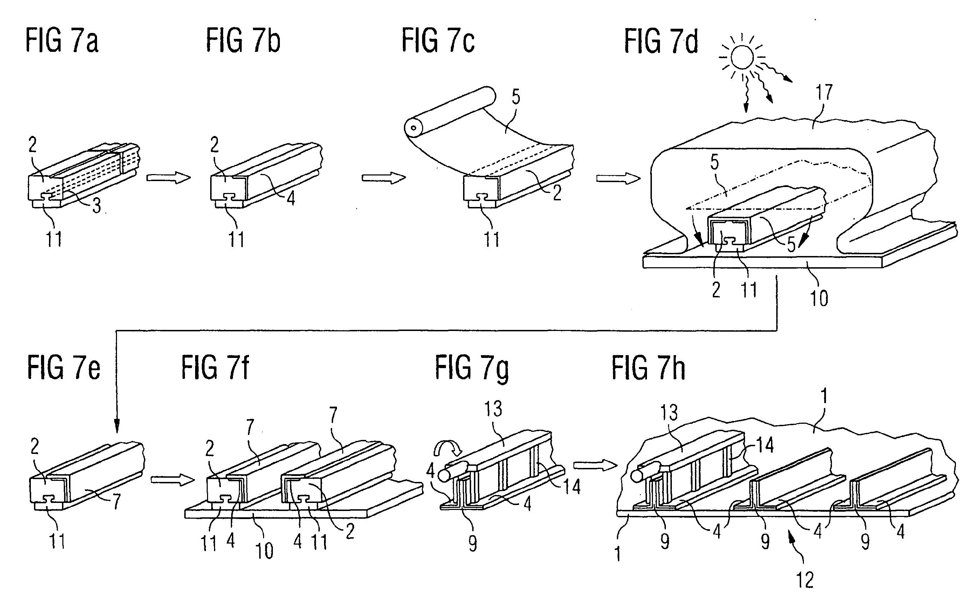

Es wird nun gleichzeitig auf Fig. 7a bis 7h Bezug genommen, welche Verfahrensschritte eines Ausführungsbeispiel eines erfindungsgemäßen Verfahrens und einer erfindungsgemäßen Umformvorrichtung zur Herstellung eines Faserverbundbauteils 1 für die Luft- und Raumfahrt schematisch illustrieren.

Das so geformte Umform-/Stützelement 4 verbleibt in dem Formabschnitt 3 des Umformwerkzeugs 2 und bildet ein Umformungswerkzeug für ein Faserhalbzeug 5 (siehe Fig. 7a, b). In einem weiteren Schritt werden Faserhalbzeuge 5 auf dem Umform-/Stützelement 4 in einer solchen Weise abgelegt und geformt, dass sie das Umform-/Stützelement 4 angepasst an seine Form umgeben (Fig. 7c).

Es können verschiedene Fertigungsverfahren zum Verarbeiten des Faserverbundwerkstoffs der Faserhalbzeuge 5 angewendet werden, wie zum Beispiel ein HotForm-Prozess. Vorzugsweise wird hier das so genannte Vakuuminfusionsverfahren gewählt. Das Prepreg-Verfahren ist hier jedoch genauso anwendbar.

Dabei wird das Umformwerkzeug 2 mit dem darauf in dem Formabschnitt 3 befindlichen Umform-/Stützelement 4, auf welchem die Faserhalbzeuge 5 abgelegt sind, unter einer Vakuumfolieneinrichtung 17, zum Beispiel in einem Autoklav unter Einwirkung von Wärme (siehe Sonnensymbol in Fig. 7d) und Druck gemäß einem Härtezyklus gehärtet, wodurch ein Versteifungsabschnitt 7 hergestellt wird (Fig. 7e).

Dieser Versteifungsabschnitt 7 besitzt in diesem Beispiel ein L-Profil und kann als L-Stringer zur Versteifung eines Faserverbundbauteils 1 verwendet werden, wie weiter unten noch ausführlicher beschrieben wird.

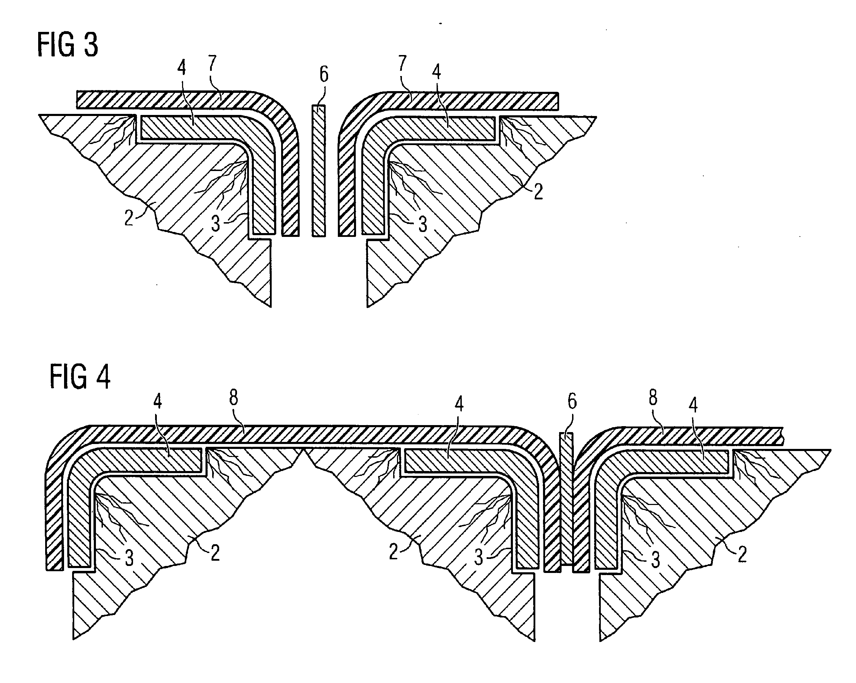

Hierzu zeigt Fig. 3 ein Ausführungsbeispiel einer Bildung eines aus zwei Versteifungsabschnitten 7 mit L-Profil zusammengesetzten Versteifungsabschnitts 9 mit T-Profil.

In Fig. 3 sind zwei Umformwerkzeuge 2 im Teilschnitt gezeigt. Sie stehen sich mit ihren Längsseiten (siehe Fig. 7f) gegenüber, wobei in ihren Formabschnitten 3 jeweils ein Umform-/Stützelement 4 aufgenommen ist, das zur jeweiligen Formung eines abgelegten Faserhalbzeugs 5 und jeweiligen Bildung eines Versteifungsabschnitts 7 mit L-Profil (siehe Fig. 7c-7f) dient. Die Versteifungsabschnitte 7 sind in diesem Beispiel an der Oberseite (langer Schenkel des L-Profils) nicht nur auf dem Umform-/Stützelement 4, sondern auch auf einem Teil der Oberfläche des Umformwerkzeugs 2 angeordnet. Die kurzen Schenkel der Verbindungsabschnitte 7 mit L-Profil stehen sich gegenüber, wobei in diesem Beispiel zwischen ihnen ein Blade zur zusätzlichen Versteifung angeordnet ist (in Fig. 7f ist kein Blade vorgesehen).

Durch Zusammenpressen der Längsseiten der Umformwerkzeuge 2 werden die kurzen Schenkel der Versteifungsabschnitte 7 mit L-Profil in geeigneter Weise zusammengefügt, wobei sich ein Versteifungsabschnitt 9 mit T-Profil bildet, dessen Basis aus den langen Schenkeln der einzelnen Versteifungsabschnitte 7 mit L-Profil besteht und auf dem Kopf steht.

Fig. 4 zeigt ein weiteres Ausführungsbeispiel einer Bildung eines aus zwei Versteifungsabschnitten 8 mit U-Profil zusammengesetzten Versteifungsabschnitts. Das U-Profil wird dadurch gebildet, dass die Faserhalbzeuge (Fig. 7c) über die Oberflächen des Umformwerkzeugs 2 und die Umform-/Stützelemente 4, die in diesem Beispiel in an zwei gegenüber liegenden Längsrändern des Umformwerkzeugs 2 eingebrachten Formabschnitten 3 aufgenommen sind, abgelegt und entsprechend umgeformt werden. In Fig. 4 sind die Versteifungsabschnitte 8 wie unter Fig. 3 beschrieben umgeformt. Aus der Fig. 4 (und Fig. 7f) ist ersichtlich, dass bei einem Zusammenpressen der Umformwerkzeuge die kurzen Schenkel der Versteifungsabschnitte 8 mit U-Profil zusammengefügt werden, wobei auch hier ein Blade 6 vorgesehen ist. Zwei oder mehr derartig zusammengefügter U-Profile können zur Bildung eines Faserverbundbauteils verwendet werden.

Es ist aber auch möglich, dass die Versteifungsabschnitte 8 mit U-Profil in ihrer Längsrichtung durchtrennt werden, wobei sich jeweils zwei Versteifungsprofile 7 mit L-Profil ergeben, die wie oben erläutert zu einem Versteifungsprofil 9 mit T-Profil (siehe Fig. 7g, h) zusammenfügbar sind. Die Länge der jeweiligen Profilschenkel ist durch die Breite des Profils des Umformwerkzeugs 2 wie auch des jeweiligen Umform-/Stützelementes 4 bestimmbar.

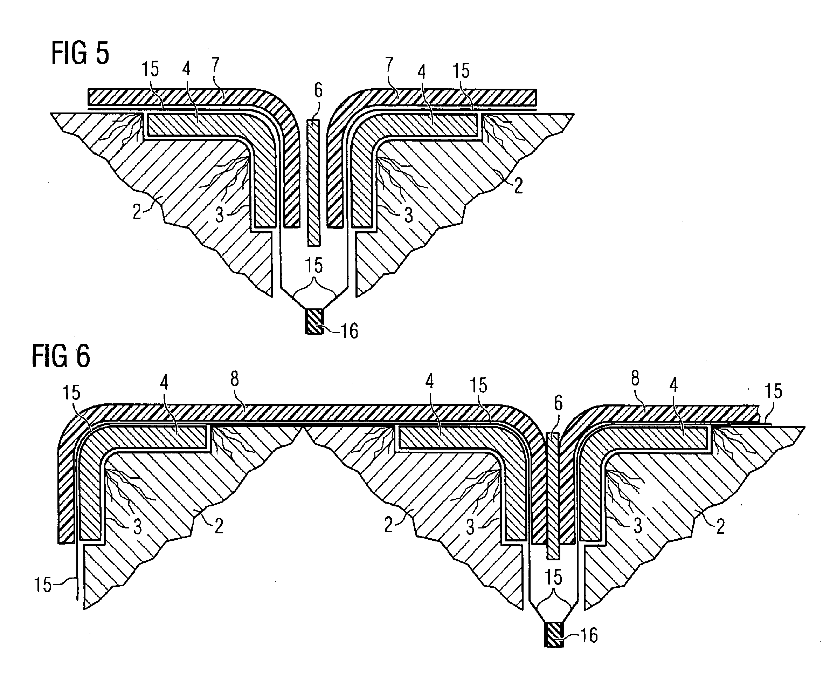

Es ist auch möglich, dass zwischen Faserhalbzeug 5 und dem formgebenden Umform-/Stützelement 4 bzw. auch dem Umformwerkzeug 2 ein Trennelement 15 angeordnet ist, wie Fig. 5 in einem Ausführungsbeispiel ähnlich Fig. 3 illustriert. Das Trennelement 15 ist hier eine Vakuumfolie, mittels welcher es möglich ist, dass bei der späteren Härtung (Fig. 7h) im Setzund Härteprozess (siehe unten) das Umform-/Stützelement 4 vom Versteifungsabschnitt 7, 8, 9 getrennt ist und somit außerhalb eines Vakuumaufbaus verbleiben kann. Damit lassen sich wie oben bereits erwähnt teure Werkzeugmaterialien vermeiden.

Die Trennelemente 15 werden je Umformwerkzeug 2 aufgebracht und in diesem Beispiel untereinander mittels eines Dichtungsmittels 16, zum Beispiel Siegelkitt, dicht verbunden.

Fig. 6 zeigt die Anwendung von Trennelementen 15 im Falle von Versteifungsabschnitten 8 mit U-Profil ähnlich zu Fig. 4. Das zu Fig. 5 Erläuterte gilt hier ebenfalls.

Fig. 7a bis 7h illustriert schematisch Verfahrensschritte eines Ausführungsbeispiels eines erfindungsgemäßen Verfahrens und einer erfindungsgemäßen Umformvorrichtung zur Herstellung eines Faserverbundbauteils 1 für die Luft- und Raumfahrt.

Die Umformvorrichtung weist das oben beschriebene Umformwerkzeug 2 mit dem ebenfalls oben beschriebenen Formabschnitt 3 auf.

In diesem Beispiel ist in Fig. 7a bis 7h das Umformwerkzeug 2 in perspektivischer Ansicht in seiner Längsausdehnung zu erkennen. Hier ist das Umformwerkzeug 2 auf einem Trägerelement 11 mit zusammenwirkenden Profilen, zum Beispiel Schwalbenschwanzprofil o. dgl., aufgenommen. Ein Formabschnitt 3 ist in Fig. 7b mit dem umgeformten Umform-/Stützelement 4 versehen. In Fig. 7c wird Faserhalbzeug 5 auf das Umform-/Stützelement 4 (und je nach Bedarf auch auf die Oberfläche des Umformwerkzeugs 2) aufgebracht. Dabei dient das Umform-/Stützelement 4 als Umformelement für das Faserhalbzeug 5 zur Bildung des Versteifungsabschnitts 7.

Ein HotForm-Prozess zur Härtung bzw. Vorhärtung des Versteifungsabschnitts 7 ist in Fig. 7d schematisch dargestellt. Hierzu befindet sich das Umformwerkzeug 2 mit dem darauf befindlichen Umform-/Stützelement 4 und dem dadurch geformten Faserhalbzeug 5 mit dem Trägerelement 11 auf einer Grundplatte 10 unter einer Vakuumfolieneinrichtung 17. Ein Sonnensymbol soll die Einwirkung von Wärme zum Aushärten bzw. Vorhärten des Versteifungsabschnitts 7 andeuten.

Der so gehärtete Versteifungsabschnitt 7 befindet sich weiterhin auf dem Umformwerkzeug 2 mit dem Umform-/Stützelement 4, wie Fig. 7e zeigt. Nun werden zur Bildung eines Versteifungsabschnitts 9 mit T-Profil in diesem Beispiel zwei wie oben beschrieben vorbereitete Umformwerkzeuge 2 mit Versteifungsabschnitten 7 auf der Grundplatte 10 angeordnet, wobei sich die Versteifungsabschnitte 7 mit L-Profil sich gegenüber stehen (hier sind die langen Schenkel der L-Profile gegenüber liegend angeordnet). Durch oben erläutertes geeignetes Zusammenpressen wird ein zusammengesetzter Versteifungsabschnitt 9 mit T-Profil erzeugt (Fig. 7f).

Mit einer Handhabungseinrichtung 13, die in Fig. 7g und 7h nur schematisch mit Greifelementen 14 gezeigt ist, wird der so gebildete Versteifungsabschnitt 9 zusammen mit den Umform-/Stützelementen 4, die nun im Weiteren als Stützelemente dienen, von den Umformwerkzeugen 2 in geeigneter, nicht weiter dargestellter Weise entfernt und gewendet. Es erfolgt ein Weitertransport des Versteifungsabschnitts 9 zusammen mit den Umform-/Stützelementen 4 auf seinen beiden Längsseiten zur Positionierung auf einem zu versteifenden Faserverbundbauteil 1, wie in Fig. 7h schematisch illustriert ist. Auf dem Faserverbundbauteil 1, zum Beispiel ein Schalenbauteil eines Seitenleitwerks eines Luft- oder Raumfahrzeugs, sind bereits weitere Versteifungsabschnitte 9 mit T-Profil positioniert worden. Sie werden weiterhin durch jeweilige Umform-/Stützelemente 4 in Funktion als Stützelement abgestützt. Diesem so genannten Setzprozess folgt ein nicht gezeigter Härteprozess, zum Beispiel ähnlich wie in Fig. 7d angegeben.

Im Falle von Trennelementen 15 (siehe Fig. 5 und 6) sind diese untereinander abgedichtet verbunden, wobei sich die Umform-/Stützelemente 4 wie oben erwähnt außerhalb dieses Vakuumaufbaus befinden.

Nach Aushärtung des so versteiften Faserverbundbauteils 1 werden die Umform-/Stützelemente 4 mittels der Handhabungseinrichtung entfernt und wieder in die Formabschnitte 3 der verwendeten Umformwerkzeuge 2 zur erneuten Verwendung eingesetzt.

Die Erfindung ist nicht auf das in den Figuren dargestellte, spezielle Verfahren und die Umformvorrichtung zur Herstellung eines Faserverbundbauteils 1 für Luft- und Raumfahrt beschränkt.

So ist beispielsweise der vorliegende Erfindungsgedanke auch auf Faserverbundbauteile im Sportgeräte- oder Motorsportbereich, anwendbar.

Ferner sind andere Profilformen der Versteifungsabschnitte 7, 8, 9 möglich.

Das Umformwerkzeug 2 kann auch aus einem gegossenen Werkstoff bestehen.

Die Umform-/Stützelemente 4 können auch aus einem Faserverbundwerkstoff, zum Beispiel CFK ausgebildet sein.

Bei einem Verfahren zur Herstellung eines versteiften Faserverbundbauteils 1 für die Luft- und Raumfahrt wird ein Umformwerkzeug 2 mit einem vorbestimmten Formabschnitt 3 bereitgestellt. Mittels des Formabschnitts 3 des Umformwerkzeugs 2 erfolgt ein Formen eines Umform-/Stützelementes 4. Danach wird ein Faserhalbzeugs 5zumindest abschnittsweise auf dem geformten Umform-/Stützelement 4 abgelegt. Mittels des Umform-/Stützelementes 4 wird ein Umformen des abgelegten Faserhalbzeugs 5 zum Bilden zumindest eines Versteifungsabschnitts 7, 8, 9 vorgenommen. Es folgt ein Abnehmen des Umform-/Stützelementes 4 mitsamt darauf gebildetem Versteifungsabschnitt 7, 8, 9 von dem Umformwerkzeug 2, worauf sich ein definiertes Positionieren des gebildeten Versteifungsabschnitts 7, 8, 9 relativ zu einem zugeordneten Faserverbundbauteilabschnitt 12 mittels Abstützung durch das Umform-/Stützelement 4 anschließt. Der Versteifungsabschnitt 7, 8, 9 wird zum Bilden des versteiften Faserverbundbauteils 1 ausgehärtet. Eine Umformvorrichtung ist mit einem vorbestimmten Formabschnitt 3 zur lösbaren Aufnahme eines Umform-/Stützelementes 4 vorgesehen.

## Patentansprüche

1. Verfahren zur Herstellung eines versteiften Faserverbundbauteils (1) für die Luft- und Raumfahrt, mit folgenden Verfahrensschritten:
(i) Bereitstellen eines Umformwerkzeugs (2) mit einem vorbestimmten Formabschnitt (3);
(ii) Formen eines Umform-/Stützelementes (4) mittels des Formabschnitts (3) des Umformwerkzeugs (2);
(iii) Ablegen eines Faserhalbzeugs (5) zumindest abschnittsweise auf dem geformten Umform-/Stützelement (4);
(iv) Umformen des abgelegten Faserhalbzeugs (5) mittels des Umform-/Stützelementes (4) zum Bilden zumindest eines Versteifungsabschnitts (7, 8, 9);
(v) Abnehmen des Umform-/Stützelementes (4) mitsamt darauf gebildetem Versteifungsabschnitt (7, 8, 9) von dem Umformwerkzeug (2);
(vi) definiertes Positionieren des gebildeten Versteifungsabschnitts (7, 8, 9) relativ zu einem zugeordneten Faserverbundbauteilabschnitt (12) mittels Abstützung durch das Umform-/Stützelement (4); und
(vii) Aushärten des Versteifungsabschnitts (7, 8, 9) zum Bilden des versteiften Faserverbundbauteils (1).

2. Verfahren nach Anspruch 1,
**dadurch gekennzeichnet,**
**dass** das Ablegen des Faserhalbzeugs (5)zumindest abschnittsweise auf dem geformten Umform-/Stützelement (4) und auf dem Umformwerkzeug (2) erfolgt.

3. Verfahren nach Anspruch 1 oder 2,
**dadurch gekennzeichnet,**
**dass** vor dem abschnittsweise Ablegen des wenigstens einen Faserhalbzeugs (5) ein Aufbringen eines Trennelementes (15) unter dem Faserhalbzeug (5) erfolgt.

4. Verfahren nach Anspruch 3,
**dadurch gekennzeichnet,**
**dass** das Trennelement (15) eine Vakuumfolie ist.

5. Verfahren nach zumindest einem der vorhergehenden Ansprüche,
**dadurch gekennzeichnet,**
**dass** nach dem Umformen des abgelegten Faserhalbzeugs (5) ein Zusammenfügen von zumindest zwei Versteifungsabschnitten (7, 8) zum Bilden zumindest eines zusammengesetzten Versteifungsabschnitts (9) erfolgt.

6. Verfahren nach Anspruch 5,
**dadurch gekennzeichnet,**
**dass** zum Bilden von zwei einzelnen Versteifungsabschnitten (7) ein Trennen eines Versteifungsabschnitts (8) in Längsrichtung erfolgt.

7. Verfahren nach Anspruch 5 oder 6,
**dadurch gekennzeichnet,**
**dass** beim Zusammenfügen die zumindest zwei Versteifungsabschnitte (7, 8) auf dem jeweiligen Umformwerkzeug (2) zusammen mit den Umform-/Stützelementen (4) verbleiben und durch ein Zusammenpressen der Umformwerkzeuge (2) zusammengefügt werden.

8. Verfahren nach zumindest einem der vorhergehenden Ansprüche,
**dadurch gekennzeichnet,**
**dass** das Abnehmen des Umform-/Stützelementes (4) mitsamt darauf gebildeten Versteifungsabschnitt (7, 8, 9) von dem Umformwerkzeug (2) und das definierte Positionieren mittels einer Handhabungseinrichtung (13) ausgeführt wird.

9. Verfahren nach zumindest einem der vorhergehenden Ansprüche,
**dadurch gekennzeichnet,**
**dass** nach dem Bilden des versteiften Faserverbundbauteils (1) das Umform-/Stützelement (4) entfernt und wieder auf dem Formabschnitt (3) des Umformwerkzeugs (2) zur Wiederverwendung abgelegt wird.

10. Verfahren nach zumindest einem der vorhergehenden Ansprüche,
**dadurch gekennzeichnet,**
**dass** das Umform-/Stützwerkzeug (4) einen metallischen Werkstoff oder/und einen Verbundwerkstoff aufweist.

11. Umformvorrichtung zur Herstellung eines versteiften Faserverbundbauteils (1) für die Luft- und Raumfahrt, mit:
einem Umformwerkzeug (2), welches einen vorbestimmten Formabschnitt (3) aufweist; und
einem Umform-/Stützelement (4), welches in dem Formabschnitt (3) des Umformwerkzeugs (2) lösbar aufgenommen ist, wobei der vorbestimmte Formabschnitt (3) des Umformwerkzeugs (2) zur Formung des Umform-/Stützelementes (4) ausgebildet ist.

## Claims

1. A method of producing a reinforced fibre composite component (1) for aerospace applications, having the following method steps:
(i) providing a forming tool (2) with a predetermined shaping portion (3);
(ii) shaping a forming/supporting element (4) by means of the shaping portion (3) of the forming tool (2);
(iii) laying a fibre semi-finished product (5) at least in places on the shaped forming/supporting element (4);
(iv) forming the laid fibre semi-finished product (5) by means of the forming/supporting element (4) to produce at least one reinforcing portion (7, 8, 9);
(v) removing the forming/supporting element (4) together with the reinforcing portion (7, 8, 9) produced thereon from the forming tool (2);
(vi) positioning the produced reinforcing portion (7, 8, 9) in a defined manner relative to an associated fibre composite component portion (12) by means of support provided by the forming/supporting element (4); and
(vii)curing the reinforcing portion (7, 8, 9) to produce the reinforced fibre composite component (1).

2. A method according to claim 1, **characterised in that** the fibre semi-finished product (5) is laid at least in places on the shaped forming/supporting element (4) and on the forming tool (2).

3. A method according to claim 1 or claim 2, **characterised in that** a release element (15) is applied under the at least one fibre semi-finished product (5) before laying of said fibre semi-finished product (5) in places.

4. A method according to claim 3, **characterised in that** the release element (15) is a vacuum film.

5. A method according to at least one of the preceding claims, **characterised in that**, after forming of the laid fibre semi-finished product (5), at least two reinforcing portions (7, 8) are assembled to produce at least one assembled reinforcing portion (9).

6. A method according to claim 5, **characterised in that** a reinforcing portion (8) is divided in the lengthwise direction to produce two individual reinforcing portions (7) .

7. A method according to claim 5 or claim 6, **characterised in that**, on assembly, the at least two reinforcing portions (7, 8) remain on the respective forming tool (2) together with the forming/supporting element (4) and are assembled by pressing the forming tools (2) together.

8. A method according to at least one of the preceding claims, **characterised in that** removing the forming/supporting element (4) together with the reinforcing portion (7, 8, 9) produced thereon from the forming tool (2) and defined positioning are performed using a handling means (13).

9. A method according to at least one of the preceding claims, **characterised in that**, once the reinforced fibre composite component (1) has been produced, the forming/supporting element (4) is removed and laid back on the shaping portion (3) of the forming tool (2) for reuse.

10. A method according to at least one of the preceding claims, **characterised in that** the forming/supporting tool (4) comprises a metallic material and/or a composite material.

11. A forming device for producing a reinforced fibre composite component (1) for aerospace applications, having:
- a forming tool (2), which comprises a predetermined shaping portion (3); and
- a forming/supporting element (4), which is accommodated detachably in the shaping portion (3) of the forming tool (2), the predetermined shaping portion (3) of the forming tool (2) being configured to shape the forming/supporting element (4).

## Revendications

1. Procédé de fabrication d'un élément composite à fibres renforcé (1) pour l'aéronautique et l'aérospatiale, présentant les opérations suivantes :
(i) mise à disposition d'un outil de déformation (2) avec une section de formage prédéfinie (3) ;
(ii) formage d'un élément de déformation/d'appui (4) au moyen de la section de formage (3) de l'outil de déformation (2) ;
(iii)dépôt d'un produit semi-fini en fibres (5), au moins par sections, sur l'élément de déformation/d'appui (4) ;
(iv) déformation du produit semi-fini en fibres déposé (5) au moyen de l'élément de déformation/d'appui (4) pour former au moins une section de renforcement (7, 8, 9) ;
(v) retrait de l'élément de déformation/d'appui (4), avec la section de renforcement (7, 8, 9) formée dessus, hors de l'outil de déformation (2) ;
(vi) positionnement d'une manière définie de la section de renforcement formée (7, 8, 9) par rapport à une section associée de la pièce composite à fibres (12), au moyen de l'étaiement par le biais de l'élément de déformation/d'appui (4) ; et
(vii) durcissement de la section de renforcement (7, 8, 9) pour former l'élément composite à fibres renforcé (1) .

2. Procédé selon la revendication 1, **caractérisé par le fait que** le dépôt du produit semi-fini en fibres (5), au moins par sections, est effectué sur l'élément de déformation/d'étaiement (4) et sur l'outil de déformation (2).

3. Procédé selon la revendication 1 ou 2, **caractérisé par le fait que**, avant le dépôt par sections d'au moins un produit semi-fini en fibres (5), une application d'un séparateur (15) est effectuée sous le produit semi-fini en fibres (5).

4. Procédé selon la revendication 3, **caractérisé par le fait que** le séparateur (15) est un film sous vide.

5. Procédé selon au moins l'une des revendications précédentes, **caractérisé par le fait que**, après la déformation du produit semi-fini en fibres déposé (5), un assemblage d'au moins deux sections de renforcement (7, 8) est réalisé pour former au moins une section de renforcement (9) composite.

6. Procédé selon la revendication 5, **caractérisé par le fait que**, pour former deux sections de renforcement (7) individuelles, une séparation d'une section de renforcement (8) est effectuée dans le sens de la longueur.

7. Procédé selon la revendication 5 ou 6, **caractérisé par le fait que**, lors de l'assemblage, au moins deux sections de renforcement (7, 8) restent sur l'outil de déformation (2) respectif conjointement avec les éléments de déformation/d'appui (4) et sont assemblées par resserrement des outils de déformation (2).

8. Procédé selon au moins l'une des revendications précédentes, **caractérisé par le fait que** le retrait de l'élément de déformation/d'appui (4), avec la section de renforcement (7, 8, 9) formée dessus, est réalisé hors de l'outil de déformation (2) et le positionnement défini est réalisé au moyen d'un dispositif de manutention (13).

9. Procédé selon au moins l'une des revendications précédentes, **caractérisé par le fait que**, après la formation de l'élément composite à fibres renforcé (1), l'élément de déformation/d'appui (4) est retiré et redéposé sur la section de formage (3) de l'outil de déformation (2) pour être réutilisé.

10. Procédé selon au moins l'une des revendications précédentes, **caractérisé par le fait que** l'élément de déformation/d'appui (4) présente un matériau métallique et/ou un matériau composite.

11. Dispositif de déformation pour la fabrication d'un élément composite à fibres renforcé (1) pour l'aéronautique et l'aérospatiale, doté de :
- un outil de déformation (2), qui présente une section de formage prédéfinie (3) ; et
- un élément de déformation/d'appui (4), qui est logé de manière amovible dans la section de formage (3) de l'outil de déformation (2), la section de formage prédéfinie (3) de l'outil de déformation (2) étant formée pour le formage de l'élément de déformation/d'appui (4).
